# EUROPEAN PATENT SPECIFICATION

(11) **EP 0 677 534 B1**
(45) Date of publication and mention of the grant of the patent: **07.05.1997**
(21) Application number: 95102395.1
(22) Date of filing: 21.02.1995
(51) Int. Cl.: C08C 19/14

(54) **Process for preparing chlorinated polyolefin and polydiolefin compounds**
Herstellung chlorierter Polyolefine und chlorierter Polydiolefine
Préparation de polyoléfines chlorées et de polydioléfines chlorées

(30) Priority: 14.04.1994 IT MI940701
(43) Date of publication of application: 18.10.1995
(73) Proprietor: INDUSTRIE CHIMICHE CAFFARO S.p.A., I-20121 Milano (IT)
(72) Inventor: Pontoglio, Enrico, I-25100 Brescia (IT); Parodi, Sandro, I-25080 Nuvolento (IT); Caretti, Giancarlo, I-25126 Brescia (IT)
(74) Representative: Forattini, Amelia

(56) References cited:
- US-A- 5 143 980

## Description

The present invention relates to a process for preparing chlorinated polyolefin and polydiolefin compounds, particularly starting from a natural or synthetic polyisoprene latex which is termed simply "latex" hereinafter. In particular, the latex is formed by a fine dispersion in water of 1:4 polyisoprene with a relative molecular mass in the region of one million.

In particular, the process is performed by virtue of the action of gaseous chlorine. The chlorinated polyolefin and polydiolefin compounds that can be obtained are soluble in organic solvents, producing solutions that have a low viscosity, preferably 3 to 100 mPa s and more preferably 5 to 40 mPa s, measured in 20% toluene and at 25°C. These solutions can be used for example in the field of anticorrosion paints, printing inks and low-viscosity adhesives.

Latex chlorination processes have been known for sixty years.

Patent GB 390,097 teaches the use of latex treatment with an oxidation-reduction reaction with large amounts of hydrogen peroxide and metallic salts. Chlorination is performed after the oxidation-reduction reaction has ended. A similar latex oxidation-reduction reaction is described in patent applications GB 2,183,663 and FR 2,259,110 with the aim of reducing the relative molecular mass of the latex. However, all these methods necessarily require very large amounts of reagent which not only entail a very high industrial cost but also leave metallic salt residues that remain in the rubber. Furthermore, the process must always be performed in two steps.

Patent US 2,736,757 teaches a two-stage latex chlorination process. In the first stage, the latex is highly acidified and stabilized with emulsifiers. Chlorine is added to the latex, obtaining a maximum degree of chlorination equal to 60% by weight. However, in order to obtain a product that is soluble in conventional organic solvents it is necessary to use a second stage, during which a diluted dispersion of the chlorinated polymer in acid water or, better still, alkaline water is prepared; chlorination is continued at high temperatures until approximately 65% by weight of chlorine is reached. During this second step of the reaction, the combined action of heat and chlorine reduces the relative molecular mass enough to produce products that are soluble in ordinary solvents used for paints. However, the time required for the process is very long, results are uncertain, two different reactors are required, and intermediate milling is necessary. Furthermore, the reagents employed not only entail a cost but also produce salts that remain in the product.

Patent FR 793,607 dated 1934 teaches a process wherein the reaction medium is subjected to intense ultraviolet irradiation during latex chlorination in order to facilitate chlorination and obtain products that are more stable. In a similar manner, patent US 5,143,980 teaches a latex chlorination process which is performed in a single stage by performing the reaction always in the same reactor and performing the second chlorination step by resorting to UV irradiation, so as to simultaneously achieve a reduction in relative molecular mass. A similar latex chlorination process is taught in patent application EP 0 545 593. It differs from the preceding one essentially due to a different way of preparing the aqueous suspension of the rubber. The latex is gradually introduced in a highly acid aqueous solution, so as to obtain a very fine dispersion of particles, simultaneously subjecting it to the action of the chlorine under UV irradiation at temperatures that gradually rise up to 70-80°C. These processes produce soluble chlorinated products only with rather long reaction times. The long time is required not so much to increase the degree of chlorination as to reduce the relative molecular mass of the small polymer fractions that are still present and have an excessively high relative molecular mass. In this manner one seeks to obtain a product that is soluble in the organic solvents employed in the final use of the product. This need is intrinsic to the method used by the processes, which entrust polymer degradation only to the action of the UV radiation and to the increase in temperature in the second chlorination step. This increase in chlorination time at high temperature entails, in addition to equipment and control problems, a decrease in the quality of the chlorinated product as regards both its film-forming characteristics and the color of its solution in the solvents generally used in the field of paints. It is also very difficult to control the relative molecular masses of the chlorinated polymer.

US-A-5,143,980 discloses a method of producing solvent-soluble chlorinated rubber having a chlorine content of 60 to 75% in which the latex is treated with chlorine in the presence of hydrochloric acid and UV-radiation.

Due to all the related problems, long-known latex chlorination processes have had practically no true industrial diffusion. Actually, almost all of the industrial production of chlorinated polyolefin and polydiolefin compounds derived from rubber is based on processes for chlorinating rubber in a form that is already separated from the latex. In particular, only processes based on the reaction of gaseous chloride on diluted rubber solutions in carbon tetrachloride have found large-scale industrial application. However, all these production processes have the drawback that they use carbon tetrachloride as a solvent, i.e. a particularly toxic substance that has long been included in the list of compounds thought responsible for depletion of stratospheric ozone. By way of example, patent FR 768.157 of 1934 describes one of these processes which suggests the use of ultraviolet radiation to reduce the reaction time and simultaneously produce photochemical degradation of the molecules of the polymer.

Accordingly, the aim of the present invention is to improve existing processes for chlorinating latex in an aqueous medium so as to obtain a chlorinated rubber that is perfectly soluble in conventional organic solvents.

An object of the invention is to perform the reaction on the latex in a single reactor without intermediate separations in order to simplify the process and the apparatus.

Another object of the invention is to significantly increase the speed of the reaction and simultaneously control the depolymerization of the polymer during the halogenation reaction.

Another object of the invention is to drastically limit the amount of reagents required, thus significantly reducing the operating costs of the production apparatus.

This aim, these objects and others can be achieved by the process according to the invention for preparing chlorinated polyolefin or polydiolefin compounds, comprising a step in which a polyolefin or polydiolefin latex is treated with gaseous chlorine in the presence of hydrochloric acid, ultraviolet radiation and hydrogen peroxide; said hydrogen peroxide being contained in the reaction medium in the amount of 0.5 to 10% by weight with respect to the weight of said polyolefin or polydiolefin compounds.

The process preferably comprises a first step in which said latex is added with a non ionic surfactant, then, preferably, with a cationic surfactant and then with hydrochloric acid, before the treatment with gaseous chlorine, said latex being preferably maintained at a temperature lower than 50°C.

Preferably the process comprises a second step in which said latex is treated with gaseous chlorine, while hydrogen peroxide is gradually introduced into the reaction medium under ultraviolet radiation; the temperature being preferably lower than 50°C.

Preferably the process comprises a third step in which the treatment with gaseous chlorine under ultraviolet radiation is carried out at a temperature gradually increasing up to 90°C to obtain a final chlorine content preferably comprised between 63 and 70% by weight.

Preferably said hydrogen peroxide is contained in the amount of 1% to 5%, preferably 1.5% to 3%, by weight with respect to the weight of said polyolefinic or polydiolefinic compound.

Preferably the introduction of said hydrogen peroxide has a duration of 10 to 90 minutes, more preferably 20 to 60 minutes.

Preferably prior to introduction in the reaction medium, said hydrogen peroxide, has a concentration of 10% to 50% and preferably of 15 to 35%.

Preferably the temperature of the reaction mixture in said first step is comprised between 20°C and 30°C.

Preferably said surfactant is gradually added during said three steps. More preferably said surfactant has an HLB above 14.

Preferably said first step comprises the addition of an antifoaming agent.

Preferably the process comprises a final step during which chlorination is completed in the absence of said hydrogen peroxide and in the presence of ultraviolet radiation.

Preferably said first step is carried out in the presence of ultra violet radiation.

Preferably said third step is performed at a temperature of 50 to 90°C.

Preferably a polyolefinic or polydiolefinic rubber has an initial concentration, in said hydrochloric acid, of 1% to 5% by weight.

Preferably said surfactant has a concentration, in said polyolefinic or polydiolefinic rubber, of 1% to 6% and preferably of 2% to 4% by weight.

When the latex is subjected directly to the action of the chlorine, it coagulates immediately due to the hydrochloric acid that forms, thus making it impossible for the chlorination reaction to continue. This drawback is preferably solved by stabilizing the emulsion by resorting to surfactants.

Non-ionic or cationic surfactants or mixtures thereof have been found to be particularly suitable. As an example of non-ionic surf surfactants, mention can be made of polyoxyethylene alkyl aryl ether glycols, ethoxylated alcohols, etc.; quaternary ammonium salts can be mentioned as an example of cationic surf surfactant. Among all these surfactants, those that have an HLB of over 14 are to be particularly preferred. Anionic surfactants, such as sulfate alcohols, alkylbenzene sulfonates and soaps, must instead be ruled out, because they are easily deactivated by the acids. In the process according to the invention, the non-ionic surfactant is added to the rubber latex initially, and the cationic surfactant is added only after this. Finally, the latex is diluted with aqueous HCl so as to have a polyisoprene rubber concentration of 1 to 5% or in any case such as to have, at the end of the reaction, a final concentration of the dispersion of chlorinated substance that is not higher than 15%. The concentration of the acid can vary between 10 and 35%, but a concentration around 20% is preferably used. The surfactant concentration, referred to the solid content of the latex, is 1% to 6%, preferably 2 to 4%.

The chlorination reaction, which is divided into three steps, is performed as follows:
1) a first rapid chlorination step, performed by injecting chlorine gas into the latex, already diluted with hydrochloric acid, and preferably but not necessarily in the dark. Chlorine absorption is very fast, mainly due to addition to double bonds, and chlorine titers of 50 to 55% are easily achieved within two hours. Heat production is rather high, and cooling is necessary to maintain the temperature below 50°C, preferably between 20 and 30°C. In this stage latex coagulation is in fact still possible and is proportionally facilitated by temperature increases. Accordingly, it is preferred to take the further precaution of gradually adding, either continuously or intermittently, additional amounts of cationic surfactant to compensate for its loss of effectiveness that occurs during the reaction. It can also be advantageous to associate with the surfactant small doses of anti-foam substances in order to control indiscriminate increases in volume. At the end of this stage, the chlorinated rubber can already be filtered and isolated, but it is still fully insoluble in organic solvents.
2) A second chlorination step, performed by irradiating with ultraviolet light and by simultaneously adding, in a gradual manner, limited doses of hydrogen peroxide. By the simultaneous effect of the hydrogen peroxide and chlorine under ultraviolet irradiation, the macromolecules are split effectively and the degree of chlorination rapidly increases. The total reaction times are thus drastically reduced. Use of hydrogen peroxide also allows, according to the amount used, to have good control over the degree of depolymerization and thus allows to obtain chlorinated rubber with different viscosities. The hydrogen peroxide can in fact be provided in appropriate doses, varying its feed time or its concentration as a function of the desired viscosities. The feed times generally range between 10 and 90 minutes and preferably between 20 and 60 minutes, whereas the concentrations of the initial hydrogen peroxide generally oscillate between 10 and 50%, preferably 15 to 35%. With respect to rubber, the amounts are rather limited and are in the range of 0.5 to 10%, preferably 1 to 5%, more preferably 1.5 to 3%. In this step, too, it is convenient to keep the temperature below 50°C.
3) A third final chlorination step, again performed under the effect of UV rays at temperatures that rise gradually in the range between 50 and 90°C. The chlorination reaction is thus completed so as to obtain chlorine contents by weight of 63 to 70%, preferably 65 to 67%, which provide optimum stability and solubility of the chlorinated rubber. In any case, during this step, by increasing the reaction time it is possible to act further on the depolymerization of the polymer, obtaining reduced viscosities in proportion to the duration of the chlorination. In this manner, the chlorine titers naturally rise well above the optimum values for the applications. In the end, the chlorinated rubbers obtained according to the claimed process are perfectly and rapidly soluble in conventional organic solvents such as toluene, xylene, methyl ethyl ketone, etc., with viscosity values, at ambient temperature and at the concentrations commonly used in industrial practice, that allow their application in the industry of paints, mainly anticorrosion paints. The present invention is illustrated by the following examples, which are enclosed by way of non-limitative example.

### Example 1

176 g of natural polyisoprene latex, concentrated at 60% by centrifugation (Alcan Rubber & Chemical Inc. Conc.) are stabilized with 2 g of non-ionic surfactant (Soprophor® BC 40 - Rhone-Poulenc). Then, under gentle mechanical agitation, 6 g of a solution of cationic surfactant (Tequat® B.C., 25% solution, Auschem) and then 3200 g of 20% HCl are slowly added. The emulsion of fine and uniform particles thus obtained is then loaded into a glass reactor provided with a mechanical agitator, a chlorine feed tube, a thermometer, a mercury-vapor immersion lamp, a gas vent and a reflux condenser. First of all, chlorine is injected with an average flow-rate of 200 g/hour, simultaneously feeding, a continuous flow of an aqueous solution of Tequat and antifoaming substance, by means of a peristaltic pump. The temperature is kept between 20 and 30°C by means of an external thermostatic bath. After one hour and thirty minutes have elapsed, the first step is complete and a rapid decrease in chlorine absorption is observed; accordingly, the UV lamp is switched on and the chlorine flow-rate is gradually reduced to 50 g per hour.

Simultaneously, a second dosage pump sends a 25% solution of hydrogen peroxide at the rate of 13.3 g/hour. After 45 minutes, the second step is complete and the supply of hydrogen peroxide is interrupted, whereas addition of the surfactants is preferably prolonged for another two hours. The total amounts fed from the beginning to the end are respectively: 10 g of 25% hydrogen peroxide, 4.5 g of 100% surfactant, and 1 g of antifoaming substance.
Chlorine continues to be injected until a chlorination time of 3 hours 15 minutes during this third step is reached, with an overall duration of 5.5 hours for the preparation. The temperature is simultaneously raised to 88°C. Finally, the excess chlorine is removed by degassing with air, and the suspension is filtered and flushed with water. Finally, the cake is dried in vacuum at 75°C. The product is white and has a 65.5% chlorine content. The 20% toluene solution is clear and bright and has a viscosity of 18 mPa s at 25°C.

The film obtained by applying the solution on a glass plate and leaving it to dry at ambient temperature is perfectly transparent.

### Example 2

The preparation of Example 1 is repeated with the same apparatus and substantially in the same working conditions, except that the third chlorination step is extended by 4.5 hours. The final result is a chlorinated rubber that has a higher chlorine content (69.5%, still soluble in toluene but with a significantly reduced viscosity value: 8 mPa s).

### Example 3

A similar chlorination is performed in the same apparatus, as already described in Example 1, but with a 30% reduction in hydrogen peroxide. 14 g of 12.5% hydrogen peroxide are thus fed in 60 minutes. After a total time of 10 hours, the chlorinated product has a 67.1% chlorine content. The 20% toluene solution is transparent and has a viscosity of 13.2 mPa s at 25°C.

### Example 4 (comparison)

Chlorination is performed in the same manner as in Example 1, but without using any hydrogen peroxide. A sharp slowing of the reaction is observed, and a sample taken after 11 hours, despite having a 68% chlorine content, does not solubilize in toluene but merely swells. It is thus necessary to extend the reaction time even further, and the product is soluble, albeit with difficulty, in toluene only after another 10 hours. This chlorinated rubber has a 70% chlorine content and a viscosity of 13.8 mPa s.

### Example 5

The natural latex is replaced with synthetic polyisoprene latex (Maxprene® IR900). Thus, 200 g (with 66.5% solid content), with the addition of 2 g of non-ionic surfactant and of 4.5 g of cationic surfactant, dispersed in 3200 g of 20% HCl, are chlorinated in darkness for 1.5 hours. While the UV lamp is on, 10 g of 25% H₂O₂ are supplied for 40 minutes. Chlorination is continued for another 8 hours, reaching a final temperature of 83°C. The chlorine titer is 67.6% and the product has, in a 20% toluene solution, a viscosity of 16 mPa s at 25°C.

### Example 6

A natural latex provided by Revertex Chemicals Ltd (LATZ®, 60% solid content) is used. 180 g of latex receive the addition of 3 g of Igepal® Co987 (70% aqueous solution of ethoxylated nonylphenol, Rhone-Poulenc) and of 6 g of Tequat® B.C., finally dispersing the latex thus stabilized in 3300 g of 15% HCl. At the end of the first chlorination step, a sample is taken and its chlorine content is determined (Cl = 54.6%). 25% hydrogen peroxide is fed intermittently over approximately 60 minutes for a total of 8.5 g of solution. Chlorination is continued for 7.5 hours, raising the temperature to 89°C. The result in the dried product is a chlorine percentage of 65.5 and a viscosity of 20% in toluene at 25°C, which is equal to 18 mPa s.

## Claims

1. Process for preparing chlorinated polyolefin or polydiolefin compounds, comprising a step in which a polyolefin or polydiolefin latex is treated with gaseous chlorine in the presence of hydrochloric acid, ultraviolet radiation and hydrogen peroxide; said hydrogen peroxide being contained in the reaction medium in the amount of 0.5 to 10% by weight with respect to the weight of said polyolefin or polydiolefin compounds.

2. Process according to claim 1 comprising a first step in which said latex is added with a non ionic surfactant, then, preferably, with a cationic surfactant and then with hydrochloric acid, before the treatment with gaseous chlorine, said latex being preferably maintained at a temperature lower than 50°C.

3. Process according to at least one of the preceding claims comprising a second step in which said latex is treated with gaseous chlorine, while hydrogen peroxide is gradually introduced into the reaction medium under ultraviolet radiation; the temperature being preferably lower than 50°C.

4. Process according to at least one of the preceding claims comprising a third step in which the treatment with gaseous chlorine under ultraviolet radiation is carried out at a temperature gradually increasing up to 90°C to obtain a final chlorine content preferably comprised between 63 and 70% by weight.

5. Process according to at least one of the preceding claims, wherein said hydrogen peroxide is contained in the amount of 1% to 5%, preferably 1.5% to 3%, by weight with respect to the weight of said polyolefinic or polydiolefinic compound.

6. Process according to at least one of the preceding claims, wherein the introduction of said hydrogen peroxide has a duration of 10 to 90 minutes, preferably 20 to 60 minutes.

7. Process according to at least one of the preceding claims, wherein prior to introduction in the reaction medium, said hydrogen peroxide, has a concentration of 10% to 50% and preferably of 15 to 35%.

8. Process according to at least one of the preceding claims, wherein the temperature of the reaction mixture in said first step is comprised between 20°C and 30°C.

9. Process according to at least one of the preceding claims, in which said surfactant is gradually added during said three steps.

10. Process according to at least one of the preceding claims, wherein said surfactant has an HLB above 14.

11. Process according to at least one of the preceding claims, wherein said first step comprises the addition of an antifoaming agent.

12. Process according to at least one of the preceding claims, comprising a final step during which chlorination is completed in the absence of said hydrogen peroxide and in the presence of ultraviolet radiation.

13. Process according to at least one of the preceding claims in which said first step is carried out in the presence of ultra violet radiation.

14. Process according to at least one of the preceding claims in which said third step is performed at a temperature of 50 to 90°C.

15. Process according to at least one of the preceding claims, wherein a polyolefinic or polydiolefinic rubber has an initial concentration, in said hydrochloric acid, of 1% to 5% by weight.

16. Process according to at least one of the preceding claims, wherein said surfactant has a concentration, in said polyolefinic or polydiolefinic rubber, of 1% to 6% and preferably of 2% to 4% by weight.

## Patentansprüche

1. Verfahren zur Herstellung chlorierter Polyolefine und chlorierter Polydiolefine, wobei in einem Schritt ein Polyolefin- oder Polydiolefin-Latex mit gasförmigem Chlor in Anwesenheit von Chlorwasserstoffsäure, ultravioletter Strahlung und Wasserstoffperoxid behandelt wird, wobei Wasserstoffperoxid in dem Reaktionsmedium in der Menge von 0,5 bis 10 Gew.-% in bezug auf das Gewicht der Polyolefine oder Polydiolefine enthalten ist.

2. Verfahren nach Anspruch 1, umfassend einen ersten Schritt, in welchem dem Latex ein nichtionischer grenzflächenaktiver Stoff (Tensid) zugeführt wird, dann, vorzugsweise ein kationisches Tensid und dann Chlorwasserstoffsäure vor der Behandlung mit gasförmigem Chlor, wobei das Latex vorzugsweise auf einer Temperatur kleiner 50 °C gehalten wird.

3. Verfahren nach wenigstens einem der vorhergehenden Ansprüche, gekennzeichnet durch einen zweiten Schritt, in welchem das Latex mit gasförmigem Chlor behandelt wird, während Wasserstoffperoxid schrittweise dem Reaktionsmedium unter ultravioletter Strahlung zugeführt wird, wobei die Temperatur vorzugsweise kleiner 50 °C gehalten wird.

4. Verfahren nach wenigstens einem der vorhergehenden Ansprüche, umfassend einen dritten Schritt, in welchem die Behandlung mit gasförmigem Chlor unter ultravioletter Strahlung bei einer schrittweise bis zu 90 °C steigenden Temperatur durchgeführt wird, um einen abschließenden Chlorgehalt vorzugsweise zwischen 63 und 70 Gew.-% zu erzielen.

5. Verfahren nach wenigstens einem der vorhergehenden Ansprüche, dadurch gekennzeichnet, daß das Wasserstoffperoxid in Anteilen von 1 bis 5 Gew.-%, vorzugsweise 1,5 bis 3 Gew.-% in bezug auf das Gewicht der Polyolefine oder Polydiolefine verwendet wird.

6. Verfahren nach wenigstens einem der vorhergehenden Ansprüche, wobei die Zuführung des Wasserstoffperoxides während einer Dauer von 10 bis 90 Minuten, vorzugsweise 20 bis 60 Minuten erfolgt.

7. Verfahren nach wenigstens einem der vorhergehenden Ansprüche, wobei vor der Zuführung des Wasserstoffperoxides in das Reaktionsmedium dieses eine Konzentration von 10 % bis 50 %, vorzugsweise 15 bis 35 % hat.

8. Verfahren nach wenigstens einem der vorhergehenden Ansprüche, wobei die Temperatur der Reaktionsmischung im ersten Schritt zwischen 20 und 30 °C ist.

9. Verfahren nach wenigstens einem der vorhergehenden Ansprüche, dadurch gekennzeichnet, daß das Tensid schrittweise während der drei Schritte zugeführt wird.

10. Verfahren nach wenigstens einem der vorhergehenden Ansprüche, dadurch gekennzeichnet, daß das Tensid einen HLB über 14 hat.

11. Verfahren nach wenigstens einem der vorhergehenden Ansprüche, dadurch gekennzeichnet, daß der erste Schritt die Zuführung eines Antischaummittels umfaßt.

12. Verfahren nach wenigstens einem der vorhergehenden Ansprüche, gekennzeichnet durch einen abschließenden Schritt, in welchem die Chlorierung in Abwesenheit von Wasserstoffperoxid aber unter ultravioletter Strahlung erfolgt.

13. Verfahren nach wenigstens einem der vorhergehenden Ansprüche, dadurch gekennzeichnet, daß der erste Schritt unter ultravioletter Bestrahlung durchgeführt wird.

14. Verfahren nach wenigstens einem der vorhergehenden Ansprüche, dadurch gekennzeichnet, daß der dritte Schritt bei einer Temperatur zwischen 50 und 90 °C durchgeführt wird.

15. Verfahren nach wenigstens einem der vorhergehenden Ansprüche, dadurch gekennzeichnet, daß Polyolefin- oder Polydiolefin-Gummi eine Anfangskonzentration von 1 bis 5 Gew.-% in der Chlorwasserstoffsäure hat.

16. Verfahren nach wenigstens einem der vorhergehenden Ansprüche, dadurch gekennzeichnet, daß das Tensid eine Konzentration von 1 bis 6 Gew.-%, vorzugsweise 2 bis 4 Gew.-% in dem Polyolefin- oder Polydiolefin-Gummi hat.

## Revendications

1. Procédé de préparation de composés de polyoléfines ou de polydioléfines chlorées, comprenant une étape dans laquelle on traite un latex de polyoléfine ou de polydioléfine avec du chlore gazeux, en présence d'acide chlorhydrique, de radiations ultraviolettes et de peroxyde d'hydrogène ; ledit peroxyde d'hydrogène étant contenu dans le milieu réactionnel selon la quantité de 0,5 à 10% en poids par rapport au poids desdits composés de polyoléfines ou de polydioléfines.

2. Procédé selon la revendication 1, comprenant une première étape dans laquelle on ajoute ledit latex avec un tensioactif non ionique, puis, de préférence, avec un tensioactif cationique et ensuite avec de l'acide chlorhydrique, avant le traitement avec du chlore gazeux, ledit latex étant de préférence maintenu à une température inférieure à 50°C.

3. Procédé selon au moins l'une des revendications précédentes comprenant une seconde étape dans laquelle on traite ledit latex avec du chlore gazeux, tandis que l'on introduit graduellement du peroxyde d'hydrogène dans le milieu réactionnel, sous des radiations ultraviolettes ; la température étant de préférence inférieure à 50°C.

4. Procédé selon au moins l'une des revendications précédentes comprenant une troisième étape dans laquelle on effectue le traitement avec du chlore gazeux sous radiations ultraviolettes, à une température augmentant graduellement jusqu'à 90°C, pour obtenir une teneur finale en chlore de préférence comprise entre 63 et 70% en poids.

5. Procédé selon au moins l'une des revendications précédentes, dans lequel ledit peroxyde d'hydrogène est contenu selon une quantité de 1% à 5%, de préférence de 1,5% à 3% en poids, par rapport au poids dudit composé de polyoléfine ou de polydioléfine.

6. Procédé selon au moins l'une des revendications précédentes, dans lequel l'introduction dudit peroxyde d'hydrogène dure de 10 à 90 minutes, de préférence de 20 à 60 minutes.

7. Procédé selon au moins l'une des revendications précédentes, dans lequel, avant l'introduction dans le milieu réactionnel, ledit peroxyde d'hydrogène possède une concentration de 10% à 50% et, de préférence, de 15 à 35%.

8. Procédé selon au moins l'une des revendications précédentes, dans lequel la température du mélange réactionnel dans ladite première étape est comprise entre 20°C et 30°C.

9. Procédé selon au moins l'une des revendications précédentes, dans lequel on ajoute ledit tensioactif graduellement durant lesdites trois étapes.

10. Procédé selon au moins l'une des revendications précédentes, dans lequel ledit tensioactif possède un HLB (équilibre hydrophile-lipophile) supérieur à 14.

11. Procédé selon au moins l'une des revendications précédentes, dans lequel ladite première étape comprend l'addition d'un agent antimousse.

12. Procédé selon au moins l'une des revendications précédentes, comprenant une étape finale durant laquelle la chloration est terminée en l'absence dudit peroxyde d'hydrogène et en présence de radiations ultraviolettes.

13. Procédé selon au moins l'une des revendications précédentes dans lequel ladite première étape est effectuée en présence de radiations ultraviolettes.

14. Procédé selon au moins l'une des revendications précédentes, dans lequel ladite troisième étape est effectuée à une température de 50 à 90°C.

15. Procédé selon au moins l'une des revendications précédentes, dans lequel un caoutchouc de polyoléfine ou de polydioléfine présente une concentration initiale, dans ledit acide chlorhydrique, de 1% à 5% en poids.

16. Procédé selon au moins l'une des revendications précédentes, dans lequel ledit tensioactif présente une concentration, dans ledit caoutchouc de polyoléfine ou de polydioléfine, de 1% à 6% et, de préférence, de 2% à 4% en poids.
